(19) Europäisches Patentamt
European Patent Office
Office européen des brevets

(11) Publication number: **0 230 399 A2**

(12) **EUROPEAN PATENT APPLICATION**

(21) Application number: **87810024.7**

(22) Date of filing: **15.01.87**

(51) Int. Cl.⁴: **E 21 B 37/08**, E 21 B 43/25, E 21 B 37/06

(30) Priority: **17.01.86 GB 8601092**
**23.09.86 GB 8622877**

(43) Date of publication of application: **29.07.87 Bulletin 87/31**

(84) Designated Contracting States: **BE CH DE FR GB IT LI NL SE**

(71) Applicant: **SANDOZ AG, Lichtstrasse 35, CH-4002 Basel (CH)**
(84) Designated Contracting States: **BE CH FR IT LI NL SE**

(71) Applicant: **SANDOZ-PATENT-GMBH, Humboldtstrasse 3, D-7850 Lörrach (DE)**
(84) Designated Contracting States: **DE**

(71) Applicant: **SANDOZ PRODUCTS LIMITED, Calverley Lane, Horsforth Leeds LS18 4RP (GB)**
(84) Designated Contracting States: **GB**

(72) Inventor: **Coates, Jacqueline Anne, 7 Balbec Avenue, leeds 6 (GB)**
Inventor: **Connell, David Longley, Ithersey, Burland Green Lane West Underwood De6 4P (GB)**

(54) **Improvements in or relating to organic compounds.**

(57) New compositions containing amine surfactant and alcohol solvent, and processes for well bore cleaning and brine cleaning using such amine surfactants.

EP 0 230 399 A2

IMPROVEMENTS IN OR RELATING TO ORGANIC COMPOUNDS

The invention relates to a process for cleaning aqueous completion or packer fluids, that is to say for removing contaminates, such as oil and solids to produce a substantially solids-free completion or packer fluid and to a method for cleaning wells.

Aqueous completion or packer fluids usually comprise calcium or zinc chlorides or bromides optionally in the presence of sodium chloride or bromide in an aqueous medium. The aqueous medium may include pitting and corrosion inhibitors and further salts such as soda ash. The density of these completion or packer fluids is usually in the range of from 1.2 to 2.5, more preferably 1.33 to 2.3 kg/litre. More preferred completion or packer fluids contain less than 10 % sodium salts.

Completion or packer fluids should be solids-free. If completion fluids are not solids-free, solids present can cause damage to a producing formation by plugging the pore spaces or even the perforations and channels provided to induce flow between the formation and the well bore. If there are solids in a packer fluid, solid will precipitate on the packer and as a result make it difficult to disconnect the tubing from the packer with a resultant costly well workover.

Completion or packer fluids can become contaminated with solids such as rust, sand, formation particles and debris, oil, pipe dope, insoluble carbonates, mud fluids and solids such as barytes, emulsifiers, thinners and cement.

According to the invention there is provided a process for providing a solids-free completion or packer fluid from a contaminated completion or packer fluid comprising adding to the contaminated fluid a composition (hereinafter referred to as "the composition") comprising

a) a compound of formula I

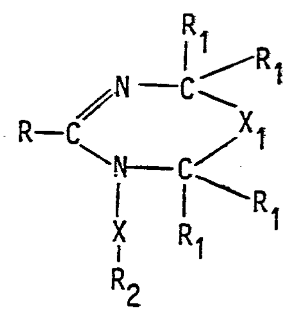

(I)

in which R is saturated or unsaturated linear or branched $C_{8-22}$alkyl;

each $R_1$, independently, is hydrogen, -OH or $C_{1-4}$alkyl;

$R_2$ is hydrogen, -OH, $-NH_2$, -NHCOR; -OOCR; or an imidazoline, tetrahydropyrimidine, oxazoline or oxazine group;

X is linear or branched $C_{1-6}$alkylene or the group $-X-R_2$ is $-(CH_2CH(R_3)O)_n$ H

where $R_3$ is hydrogen or methyl and n is an integer from 2 to 6 inclusive ; and

$X_1$ is a direct bond or

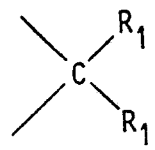

; or

b) a compound of formula II

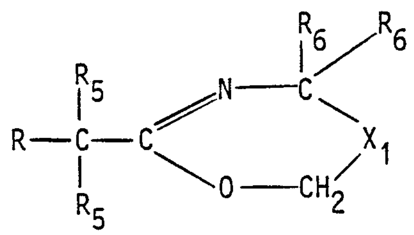

(II)

in which $X_1$ and R are as defined above;

$R_5$ is hydrogen, hydroxy$C_{1-4}$alkyl or $C_{1-4}$alkyl;

each $R_6$, independently, is hydrogen or a linear or branched $C_{1-22}$alkyl group, unsubstituted or monosubstituted by -OH or halogen; or

c) a compound of formula III

$$R\text{-}COO\text{-}X_2\text{-}N(R_7)_2 \qquad (III)$$

in which R is as defined above;

$X_2$ is $C_{2-6}$alkylene;

each $R_7$ independently, is hydrogen, $C_{1-4}$alkyl; $[CH_2\text{-}CH(R_3)\text{-}O\text{-}]_n H$ or hydroxy-$C_{2-4}$alkyl; and where $R_3$ and n are as defined above; or

d) a compound of formula IV

$$R-N^{\oplus}(R_9)_3 \quad A^{\ominus} \qquad (IV)$$

in which R is as defined above;

each $R_9$, independently, is linear or branched $C_{1-22}$alkyl, unsubstituted or monosubstituted by -OH or halogen, $-(CH_2-CHR_3-O-)_n\ H$ or benzyl;
where $R_3$ is as defined above and n is an integer from 1 to 10 inclusive; and

$A^{\ominus}$ is an anion (preferably halide or $CH_3SO_4^{\ominus}$); or

e) a compound of formula V

$$R_{10}-CO-NR_{11}-[-X_4-NR_{11}-]_{n'}-R_{11} \qquad (V)$$

in which $R_{10}$ is linear or branched, saturated or unsaturated $C_{1-22}$alkyl, unsubstituted or monosubstituted by -OH or a halogen atom;
n' is an integer from 1 to 4 inclusive;
each $R_{11}$, independently, has a significance of $R_{10}$ (independently of $R_{10}$) or is hydrogen, amino-$C_{1-4}$alkyl, $-(CH_2CHR_3-O-)_n\ H$; $R_{10}$-CO- or benzyl where $R_3$ and n is as defined above; and

$X_4$ is $C_{2-6}$alkylene unsubstituted or monosubstituted by -OH;

components a) to c) and e) optionally being further reacted with a linear or branched, saturated or unsaturated $C_{1-22}$ fatty acid, unsubstituted or monosubstituted by -OH or a halogen atom; or with an organic sulphonic acid (preferably $C_{12}H_{25}$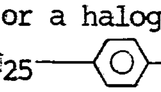$SO_3H$) to produce the amine salt form of any free amino groups present in the compound of the particular component.

In this specification if a symbol appears more than once in a formula, its significances are independent of one another unless indicated to the contrary.

By the term halogen is meant chlorine or bromine preferably chlorine and by the term amino$C_{1-4}$alkyl is meant $C_{1-4}$alkyl monosubstituted by $-NH_2$.

When $R_2$ is a ring structure, this is preferably an imidazoline or an oxazoline ring structure, preferably a group derived from a compound of formula I or a compound of formula II respectively.

When $R_{11}$ is $C_{1-22}$alkyl, this is preferably $C_{1-8}$alkyl, more preferably $C_{1-4}$alkyl, most preferably $C_{2-3}$alkyl.

Preferably R is R' where R' is $C_{16-18}$alkyl, more preferably R is R" where R" is oleyl.

Preferably $R_1$ is hydrogen.
Preferably X is $-C_2H_4-$.
Preferably $R_2$ is -OH.
Preferably $X_1$ is a direct bond.
Preferably $X_2$ is $X_2'$ where $X_2'$ is $C_{2-4}$alkylene.
Preferably $X_4$ is $X_4'$ where $X_4'$ is $C_{2-4}$alkylene.
Preferably $R_5$ is hydrogen.
Preferably $R_6$ is $R_6'$ where $R_6'$ is $C_{1-3}$alkyl or $-CH_2OH$.
Preferably $R_7$ is $R_7'$ where $R_7'$ is hydrogen, $-CH_3$, $-C_2H_5$ or $-C_2H_4OH$.
Preferably $R_9$ is $R_9'$ where $R_9'$ is benzyl, $-CH_3$, $-C_2H_5$ or $-CH_2CH_2OH$.
Preferably $R_{10}$ is $C_{16-18}$alkyl, more preferably oleyl.
Preferably $R_{11}$ is $R_{11}'$ where $R_{11}'$ is $-CH_2CH_2OH$.

The term oleyl refers to a $C_{17}$alkyl group derived from oleic acid, which itself is usually derived from mixed acids (e.g. soya, tall oil or tallow).

For the avoidance of doubt, in the said composition one or more compounds of a particular component [selected from components a) to e)] may be present as well as one or more different components.

A preferred compound of formula I is of formula Ia

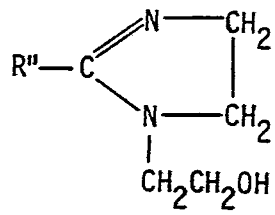

(Ia)

where R'' is oleyl.

A preferred compound of formula II is of formula IIa

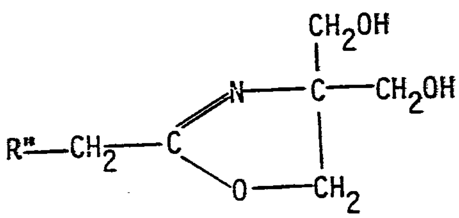

(IIa)

where R'' is oleyl.

A preferred compound of formula III is of formula IIIa

$$R'' - CO - O - C_2H_4 - N\ (C_2H_4OH)_2 \qquad \text{(IIIa)}$$

where R'' is oleyl.

A preferred compound of formula IV is of formula IVa

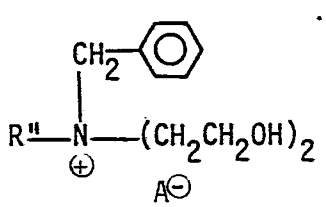

(IVa)

where R'' is oleyl and $A^{\ominus}$ is an anion.

Preferred compounds of formula V are of formula Va, Vb and Vc

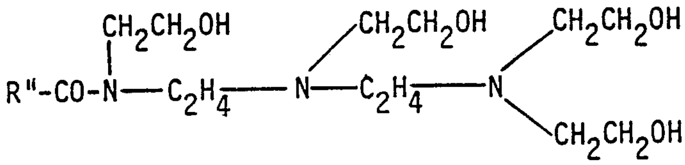

(Va)

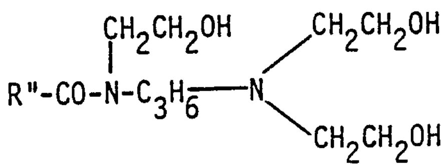

(Vb)

$R''-CO-NR_a-CH_2CH_2OH$ (Vc)

where $R_a$ is hydrogen or $-CH_2CH_2OH$ and R" is oleyl.

In a process according to the invention one or more of the following components may be added to the completion or packer fluid (either together with the composition or separately from the composition):

A) Linear or branched $C_{4-14}$alcohols, unsubstituted or monosubstituted by hydroxy (for example ethyl hexanol; isononanol or tridecanol) (herein defined as Component A);

B) Glycols (especially ethylene glycol) and $C_{1-6}$alkyl glycol derivatives such as propylene glycol monomethyl ethers (herein defined as Component B).

C) Hydrocarbon solvents, such as diesel oil (herein defined as Component C).

Of the compounds of formulae I to V, those of formula I, III and V are preferred, more preferably those of formula I

A process according to the invention is usually carried out by thoroughly mixing the composition in the completion or packer fluid to ensure homogeneous dispersion (in the mud pit or processing tank).

Once the composition has been thoroughly dispersed, agitation is stopped and the mixture is allowed to stand for some time (depending on the completion or packer fluid, from hours to days). The contaminants will usually rise to the surface leaving a clear completion or packer fluid (although in some cases the contaminants may settle on the bottom rather than on the surface). The process thus alleviates the need for a large number of filters. Often the process is carried out when the completion or packer fluid is warm (i.e. at temperatures of 25 to 90°C).

The use of solids-free completion or packer fluids are well known, for example as described in European Patent Application No. 103 779 A. The uses described in this patent application are incorporated herein by reference.

Further, according to the invention, there is provided a method for eliminating contaminates from a well comprising

1. introducing treated water into the well to displace a major portion of the contaminates from the well, the treated water comprising clean water and the composition (optionally together with one or more of Components A to C defined above); and

2. introducing into the well a solids-free well fluid for displacing or carrying the treated water from the well.

In making up the treated water one or more of Components A to C may be added to the clean water before or after the addition of the said composition.

In a method of the invention, it is possible to displace a certain amount of contaminates in the well by introducing a spacer fluid prior to the said composition to remove a major portion of the contaminates. The spacer fluid is then displaced by introducing the

treated water which substantially removes the remaining contaminates not picked up by the spacer fluid. The treated water itself can be displaced from the well by a further spacer fluid (which may be the same as a earlier one) followed by introduction of a solids-free well fluid without interrupting circulation through the well. One or both of the spacer fluids are preferably clean water, a completion or packer fluid or a mixture of clean water and a completion and packer fluid.

Preferably the spacer fluid can be an aqueous spacer containing a viscosifier to produce a non-newtonian fluid, that is circulated in the well as a slug in a gel state in laminar flow, and the treated water is a newtonian fluid that is circulated at turbulent flow conditions through the well system.

The aqueous spacers are conveniently clean water containing a viscosifier polymer. If the drilling fluid includes invert emulsion (water-in-oil) residues such as mud cake, an organic based solvent, such as a hydrocarbon, may be included in the first aqueous spacer.

Preferably the amount of the said composition (including any further components A to C defined above) is less than 1.5 %, more preferably 0.25 to 1 % of the clean water or completion fluid to be treated.

The performance of the above method for removing contaminates from a well suspension of a drilling mud and other contaminates in the circulating treated water may be enhanced by reciprocating the well pipe within the well bore, periodically.

Preferably in a process or method according to the invention, a compound of formula I is used in the composition. This is preferably used together with a $C_{4-14}$alcohol, preferably in a 50:50 mix ratio.

Compounds of formula I and formula II are conventionally formed by cyclising the corresponding amide. In this process conversion is often not 100 % and up to 50 % of the amide used for cyclisation may be present. Compounds of formula III to V are known or may be made by known methods from appropriate reactants.

The invention will now be illustrated by the following Examples in which all parts are by weight and all percentages are by volume unless indicated to the contrary and all temperatures are in °C unless indicated to the contrary.

EXAMPLE 1

The preparation of a compound of the formula 1a

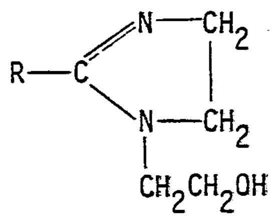

(1a)

where R is oleyl, can be carried out as follows:

Into a suitable vessel equipped for nitrogen sparging, stirring and distillation, 39.2 parts of oleic acid are added and stirred whilst bubbling nitrogen into the vessel to create a nitrogen atmosphere. 15.6 Parts of monoethanolethylenediamine are then added and the temperature of the reaction mixture is slowly raised to 170°. Water starts to distil off at 130-140° and the mixture is stirred once it reaches 170° until distillation ceases. The mixture is then stirred under vacuum for several hours (170° and under 700 mm Hg vacuum) until analysis indicates about 80 % formation of the imidazoline of formula 1a.

EXAMPLES 2 to 4

A calcium chloride completion fluid, contaminated with 3-4 % by weight oils and solids is treated with Cleaning Composition 1, which is a 40 % solution of the product containing the compound of formula I of Example 1 in ethylhexanol.

The amount of composition 1 added to the contaminated fluid is as follows:

| | | | |
|---|---|---|---|
| Example 2 | 0.25 % | V/V | (volume by volume) |
| Example 3 | 0.5 % | V/V | |
| Example 4 | 1.0 % | V/V | |

The completion fluids together with Cleaning Composition 1 are then mixed well by shaking 20 times and are then left to separate.

In Example 2, the solids are seen to be separating out after 15 minutes. In Example 3, separation occurs within 5 minutes and the solution clears overnight. In Example 4, the completion fluid clears within 30 minutes.

The contaminants, both, solids and oil, rise to the top of the completion fluid and so the underlying completion fluid can easily be removed and filtered for re-use.

Examples 5 and 6

Similar calcium chloride completion fluids (to those in Examples 2 to 4) are treated in the same way as in Examples 2 to 4 using instead of Cleaning Composition 1 the following additions:

| | |
|---|---|
| Example 5 | 1 % of Cleaning Composition 1 (defined in Examples 2 to 4) |
| Example 6 | 1 % of Cleaning Composition 2 which is a 40 % solution of a 50:50 mix of the compound of formula 1a and $RCONHC_2H_4OH$ in ethyl hexanol, where R is oleyl. |

The completion fluids, together with cleaning composition, are treated according to the method of Examples 2 to 4 and the results are as follows:

| Example No. | Time for oil separation to start | Direction of oil/dirt removal | clarity of fluid overnight |
|---|---|---|---|
| 5 | 2 minutes | up | clear |
| 6 | 2 minutes | up | almost clear |

As a comparative test (Comparative Example A) the calcium chloride completion fluid of Examples 5 and 6 is treated with 1 % of a commercially available product known as "Dirt Magnet" according to the method employed in Examples 5 and 6. The result is as given below:

| Time for oil separation | Direction of oil/dirt removal | Clarity of fluid overnight |
|---|---|---|
| 1 minute | up and down | cloudy |

EXAMPLES 7 to 10

Zinc bromide completion fluids, containing 3 to 4 % by weight oily contaminants are treated with the following additions of cleaning composition:

Example 7  1 % of Cleaning Composition 3 which comprises: -

8 % of the compound of formula 7a

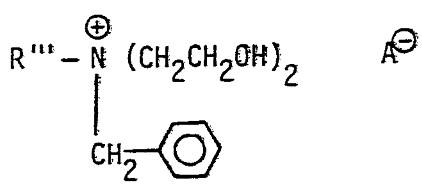

(7a)

where R''' is oleyl derived tallow and $A^{\ominus}$ is an anion;

6.1 % water

0.8 % isopropanol

2.4 % methylpropoxol

2.9 % ethylhexanol and

79.8 % diesel oil

Example 8:  1 % of Cleaning Composition 4 which comprises:

8 % of a 50:50 mix of the product containing the compound of formula la of Example 1 and $RCONHC_2H_4NHC_2H_4OH$ (where R is oleyl) 1:1 molar salted with dodecylbenzene sulphonic acid

3.2 % ethylhexanol
80.8 % diesel oil
2.0 % kerosene and
6.0 % white oil

Example 9: 1 % of Cleaning Composition 1

Example 10: 1 % of Cleaning Composition 5 which is a 20 % solution in diesel oil of Cleaning Composition 1.

Each of the completion fluids is treated as in Examples 2 to 4 and the following results are obtained:

| Example No. | Time for separation | Direction of contaminates | clarity after 24 hours |
|---|---|---|---|
| 7 | 1 minute | up | clear |
| 8 | 1 minute | up | clear |
| 9 | 15 minutes | up | clear (but solids on bottom) |
| 10 | 1 minute | up | clear |

EXAMPLES 11 TO 13

Contaminated calcium brines similar to those in Examples 2 to 4 are treated with the following cleaning compositions instead of Cleaning Composition 1 according to the method of Examples 2 to 4.

EXAMPLE 11

1 % of Cleaning Composition 6 which is a 40 % solution in ethyl hexanol of the compound of formula lla

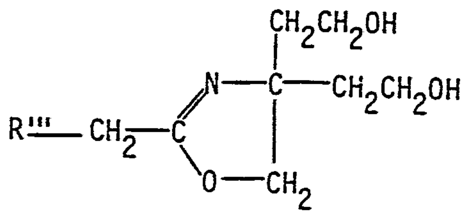

(11a)

where R''' is oleyl derived from tallow.

EXAMPLE 12

1 % of Cleaning Composition 7 to which is a 40 % solution in ethylhexanol of the compound of formula 12a

$$R'''\text{-}COO\ C_3H_6\ N(C_2H_4OH)_2 \qquad (12a)$$

where R''' is oleyl derived from tallow.

EXAMPLE 13

1 % of Cleaning Composition 8 which is a 40 % solution in ethylhexanol of the compound of formula 13a

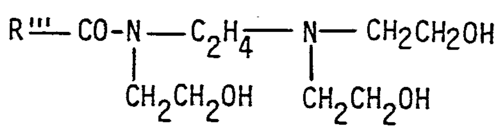

(13a)

where R''' is oleyl derived from tallow.

The treated completion fluids showed good separation of the oil and solids contaminants, which rose to the surface of the fluid.

EXAMPLE 14

A calcium chloride completion brine, contaminated with 3 to 4 % by weight oils and solids is treated with 1 % of Cleaning Composition 9, which is

40 % of the product containing the compound of formula la of

Example 1

29 % isononanol

29 % tridecanol and

2 % ethylene glycol

according to the method of Examples 2 to 4.

As a comparative Example (comparative Example B) the same brine as that of Example 14 is treated in the same manner as Example 14 except that 1 % of Dirt Magnet is used instead of Cleaning Composition 9.

The treated brine of Example 14 gave a superior speed of contaminants separation and left a cleaner brine than that of comparative Example B.

EXAMPLE 15

A viscosified calcium completion brine, containing approximately 4 % by weight of solid contaminants with no visible oil is deviscosified by treatment with sodium hypochlorite and then treated with 1 % of Cleaning Composition 10, which is

40 % of the product containing the compound of formula la of Example 1

15 % tridecanol

15 % isononanol and

30 % ethylene glycol

according to the method of Examples 2 to 4.

The brine of Example 15 cleared within 5 minutes to leave all solids at the surface and a very clear brine.

EXAMPLES 16, 17 and 18

Example 14 is repeated using instead of 40 % of the product containing the compound of formula Ia, 40 % of the product of reacting tall oil (oleic acid) with a) monoethanolamine

(Example 16) b) diethanolamine (Example 17) and triethanolamine (Example 18).

EXAMPLES 19, 20 and 21

Example 15 is repeated using instead of 40 % of the product containing the compound of formula la, 40 % of the product of reacting tall oil (oleic acid) with a) monoethanolamine (Example 19) b) diethanolamine (Example 20) and c) triethanolamine (Example 21).

The treated brines show good separation of contaminants and leave a clear brine.

WHAT IS CLAIMED IS: -

1. A process for providing a solids-free completion or packer fluid from a contaminated completion or packer fluid comprising adding to the contaminated fluid a composition (hereinafter referred to as "the composition") comprising

a) a compound of formula I

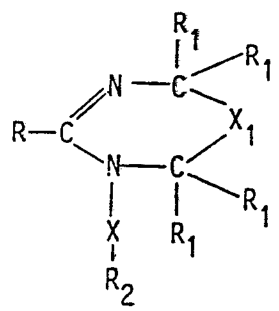

(I)

in which R is saturated or unsaturated linear or branched $C_{8-22}$alkyl;

each $R_1$, independently, is hydrogen, -OH or $C_{1-4}$alkyl;

$R_2$ is hydrogen, -OH, $-NH_2$, -NHCOR; -OOCR; or an imidazoline, tetrahydropyrimidine, oxazoline or oxazine group;

X is linear or branched $C_{1-6}$alkylene or the group $-X-R_2$ is $-(CH_2CH(R_3)O)_n H$

where $R_3$ is hydrogen or methyl and n is an integer from 2 to 6 inclusive ; and

$X_1$ is a direct bond or

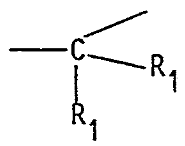 ; or

b) a compound of formula II

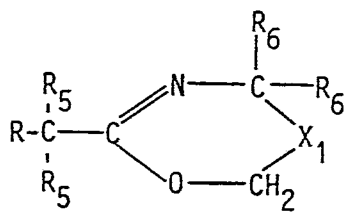 (II)

in which $X_1$ and R are as defined above;
$R_5$ is hydrogen, hydroxy$C_{1-4}$alkyl or $C_{1-4}$alkyl;
each $R_6$, independently, is hydrogen or a linear or branched $C_{1-22}$alkyl group, unsubstituted or monosubstituted by -OH or halogen; or

c) a compound of formula III

$R\text{-}COO\text{-}X_2\text{-}N(R_7)_2$ (III)

in which R is as defined above;
$X_2$ is $C_{2-6}$alkylene;
each $R_7$ independently, is hydrogen, $C_{1-4}$alkyl; $-[CH_2\text{-}CH(R_3)\text{-}O\text{-}]_n\,H$ or hydroxy-$C_{2-4}$alkyl; and where $R_3$ and n are as defined above; or

d) a compound of formula IV

$R - N^{\oplus}(R_9)_3 \quad A^{\ominus}$ (IV)

in which R is as defined above;

each $R_9$, independently, is linear or branched $C_{1-22}$alkyl, unsubstituted or monosubstituted by -OH or halogen, $-(CH_2-CHR_3-O-)_n H$ or benzyl where $R_3$ is as defined above and n is an integer from 1 to 10 inclusive; and

$A^{\ominus}$ is an anion; or

e) a compound of formula V

$$R_{10}-CO-NR_{11} -\!\!\left[ X_4 - NR_{11} \right]_{n'}\!\!- R_{11} \qquad (V)$$

in which $R_{10}$ is linear or branched, saturated or unsaturated $C_{1-22}$alkyl, unsubstituted or monosubstituted by -OH or a halogen atom;

n' is an integer from 0 to 4 inclusive;

each $R_{11}$, independently, has a significance of $R_{10}$ (independently of $R_{10}$) or is hydrogen, amino-$C_{1-4}$alkyl, $(-CH_2-CHR_3-O-)_n H$ ; $R_{10}$-CO- or benzyl where $R_3$ and n is as defined above; and

$X_4$ is $C_{2-6}$alkylene unsubstituted or monosubstituted by -OH;

components a) to c) and e) optionally being further reacted with a linear or branched, saturated or unsaturated $C_{1-22}$ fatty acid, unsubstituted or monosubstituted by -OH or a halogen atom; or with an organic sulphonic acid to produce the amine salt form of any free amino groups present in the compound of the particular component.

2. A process according to Claim 1 comprising adding to the completion or packer fluid (either together with "the composition" or before or after addition of "the composition") one or more components selected from

A) Linear or branched $C_{4-14}$alcohols, unsubstituted or monosubstituted by hydroxy (herein defined as Component A).

B) Glycols and $C_{1-6}$glycol derivatives (herein defined as Component B).

C) Hydrocarbon solvents (herein defined as Component C).

3. A method, for eliminating contaminates from a well, comprising

i) introducing treated water into the well to displace a major portion of the contaminates from the well, the treated water comprising clear water and a composition comprising

a) a compound of formula I

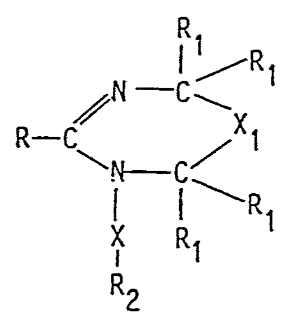

(I)

in which R is saturated or unsaturated linear or branched $C_{8-22}$alkyl;

each $R_1$, independently, is hydrogen, -OH or $C_{1-4}$alkyl;

$R_2$ is hydrogen, -OH, $-NH_2$, -NHCOR; -OOCR; or an imidazoline, tetrahydropyrimidine, oxazoline or oxazine group;

X is linear or branched $C_{1-6}$alkylene or the group $-X-R_2$ is $-(CH_2CH(R_3)O)_n$ H

where $R_3$ is hydrogen or methyl and n is an integer from 2 to 6 inclusive ; and

$X_1$ is a direct bond or

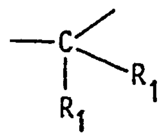

; or

b) a compound of formula II

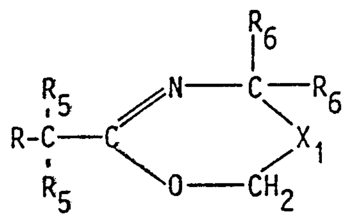

(II)

in which $X_1$ and R are as defined above;

$R_5$ is hydrogen, hydroxy$C_{1-4}$alkyl or $C_{1-4}$alkyl;

each $R_6$, independently, is hydrogen or a linear or branched $C_{1-22}$alkyl group, unsubstituted or monosubstituted by -OH or halogen; or

c) a compound of formula III

$R\text{-}COO\text{-}X_2\text{-}N(R_7)_2$ (III)

in which R is as defined above;

$X_2$ is $C_{2-6}$alkylene; and

each $R_7$ independently, is hydrogen, $C_{1-4}$alkyl; $[CH_2\text{-}CH(R_3)\text{-}O\text{-}]_n$ H or hydroxy-$C_{2-4}$alkyl where $R_3$ and n are as defined above; or

d) a compound of formula IV

$$R - N^{\oplus}(R_9)_3 - A^{\ominus} \quad (IV)$$

in which R is as defined above;

each $R_9$, independently, is linear or branched $C_{1-22}$alkyl, unsubstituted or monosubstituted by -OH or halogen, $-(CH_2-CHR_3-O-)_n H$ or benzyl where $R_3$ is as defined above and n is an integer from 1 to 10 inclusive; and

$A^{\ominus}$ is an anion; or

e) a compound of formula V

$$R_{10}\text{-CO-NR}_{11} -[- X_4 - NR_{11} -]_{n'} - R_{11} \quad (V)$$

in which $R_{10}$ is linear or branched, saturated or unsaturated $C_{1-22}$alkyl, unsubstituted or monosubstituted by -OH or a halogen atom;

n' is an integer from 0 to 4 inclusive;

each $R_{11}$, independently, has a significance of $R_{10}$ (independently of $R_{10}$) or is hydrogen, amino-$C_{1-4}$alkyl, $(-CH_2-CHR_3-O-)_n H$ ; $R_{10}$-CO-or benzyl where $R_3$ and n is as defined above; and

$X_4$ is $C_{2-6}$alkylene unsubstituted or monosubstituted by -OH;

components a) to c) and e) optionally being further reacted with a linear or branched, saturated or unsaturated $C_{1-22}$ fatty acid, unsubstituted or monosubstituted by -OH or a halogen atom; or with an organic sulphonic acid to produce the amine salt form of any free amino groups present in the compound of the particular component. and

ii). introducing into the well a solids-free well fluid for displacing or carrying the treated water from the well.

4. A method according to Claim 3 comprising adding (either before, or at the same time as or after the addition of "the composition") one or more components selected from

A) Linear or branched $C_{4-14}$alcohols, unsubstituted or monosubstituted by hydroxy (herein defined as Component A),

B) Glycols and $C_{1-6}$glycol derivatives (herein defined as Component B),

C) Hydrocarbon solvents (herein defined as Component C).

5. A composition comprising

a) a compound of formula I

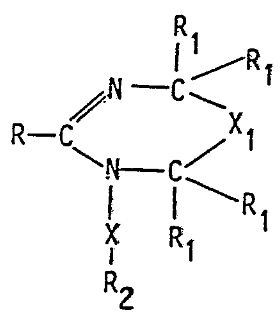

(I)

in which R is saturated or unsaturated linear or branched $C_{8-22}$alkyl;

each $R_1$, independently, is hydrogen, -OH or $C_{1-4}$alkyl;

$R_2$ is hydrogen, -OH, $-NH_2$, -NHCOR; -OOCR; or an imidazoline, tetrahydropyrimidine, oxazoline or oxazine group;

X is linear or branched $C_{1-6}$alkylene or, the group $-X-R_2$ is $-(CH_2CH(R_3)O)_n$ H

where $R_3$ is hydrogen or methyl and n is an integer from 2 to 6 inclusive ; and

$X_1$ is a direct bond or

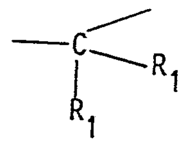 ; or

b) a compound of formula II

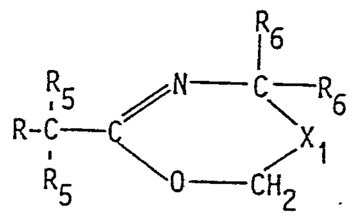 (II)

in which $X_1$ and R are as defined above;

$R_5$ is hydrogen, hydroxy$C_{1-4}$alkyl or $C_{1-4}$alkyl;

each $R_6$, independently, is hydrogen or a linear or branched $C_{1-22}$alkyl group, unsubstituted or monosubstituted by -OH or halogen; or

c) a compound of formula III

$$R\text{-}COO\text{-}X_2\text{-}N(R_7)_2 \qquad \text{(III)}$$

in which R is as defined above;

$X_2$ is $C_{2-6}$alkylene; and

each $R_7$ independently, is hydrogen, $C_{1-4}$alkyl; $-[CH_2\text{-}CH(R_3)\text{-}O\text{-}]_n H$ or hydroxy-$C_{2-4}$alkyl

where $R_3$ and n are as defined above; or

d) a compound of formula IV

$$R - N^{\oplus}(R_9)_3 \quad A^{\ominus} \qquad \text{(IV)}$$

in which R is as defined above;

each $R_9$, independently, is linear or branched $C_{1-22}$alkyl, unsubstituted or monosubstituted by -OH or halogen, $-(CH_2\text{-}CHR_3\text{-}O\text{-})_n H$ or benzyl where $R_3$ is as defined above and n is an integer from 1 to 10 inclusive; and

$A^{\ominus}$ is an anion (preferably halide or $CH_3SO_4^-$); or

e) a compound of formula V

$$R_{10}\text{-CO-NR}_{11}\text{-}[\text{-}X_4\text{-NR}_{11}\text{-}]_{n'}\text{-}R_{11} \qquad (V)$$

in which $R_{10}$ is linear or branched, saturated or unsaturated $C_{1-22}$alkyl, unsubstituted or monosubstituted by -OH or a halogen atom;

n' is an integer from 0 to 4 inclusive;

each $R_{11}$, independently, has a significance of $R_{10}$ (independently of $R_{10}$) or is hydrogen, amino-$C_{1-4}$alkyl, $(-CH_2-CHR_3-O-)_n$ H ; $R_{10}$-CO- or benzyl where $R_3$ and n is as defined above; and

$X_4$ is $C_{2-6}$alkylene unsubstituted or monosubstituted by -OH;

components a) to c) and e) optionally being further reacted with a linear or branched, saturated or unsaturated $C_{1-22}$ fatty acid, unsubstituted or monosubstituted by -OH or a halogen atom; or with an organic sulphonic acid to produce the amine salt form of any free amino groups present in the compound of the particular component; and one or more components selected from

A) Linear or branched $C_{4-14}$alcohols, unsubstituted or monosubstituted by hydroxy (herein defined as Component A);

B) Glycols and $C_{1-6}$glycol derivatives (herein defined as Component B)

C) Hydrocarbon solvents (herein defined as Component C),

6. A composition according to Claim 5 which contains at least a compound of formula I defined in Claim 1.

7. A composition according to Claim 6 in which the compound of formula I is of formula Ia

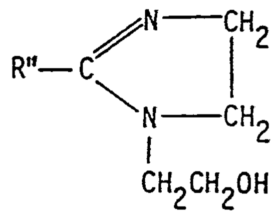

(Ia)

where R" is oleyl.

8. A composition according to Claim 5, in which Component A is selected from ethylhexanol, isononanol and tridecanol; Component B is selected from ethylene glycol and propylene glycol monomethyl ether and Component C is diesel oil.

9. A composition according to Claim 8, in which 1 to 80 % of components a to e and 20 to 99 % of Components A to C are present.

10. A composition according to Claim 9, in which 5 to 50 % of components a to e and 50 to 95 % Components A to C are present.

3700/DM/KC/FZ